**Europäisches Patentamt**

**European Patent Office**

**Office européen des brevets**

(11) Veröffentlichungsnummer : **0 336 891 B1**

(19)

(12) **EUROPÄISCHE PATENTSCHRIFT**

(45) Veröffentlichungstag der Patentschrift :
**29.07.92 Patentblatt 92/31**

(21) Anmeldenummer : **89810210.8**

(22) Anmeldetag : **17.03.89**

(51) Int. Cl.⁵ : **G01B 5/24, B25H 7/00**

(54) **Winkelmessgerät.**

(30) Priorität : **25.03.88 CH 1137/88**
**20.12.88 CH 4708/88**

(43) Veröffentlichungstag der Anmeldung :
**11.10.89 Patentblatt 89/41**

(45) Bekanntmachung des Hinweises auf die
Patenterteilung :
**29.07.92 Patentblatt 92/31**

(84) Benannte Vertragsstaaten :
**AT BE CH DE ES FR GB GR IT LI LU NL SE**

(56) Entgegenhaltungen :
**AT-B- 337 468**
**US-A- 3 344 531**
**US-A- 4 112 581**

(73) Patentinhaber : **Willa, Siegfried**
**Bahnhofstrasse 4+6**
**CH-3900 Brig(Kanton Wallis) (CH)**

(72) Erfinder : **Willa, Siegfried**
**Bahnhofstrasse 4+6**
**CH-3900 Brig(Kanton Wallis) (CH)**

(74) Vertreter : **Tschudi, Lorenz et al**
**Bovard AG Patentanwälte VSP**
**Optingenstrasse 16**
**CH-3000 Bern 25 (CH)**

## Beschreibung

Die vorliegende Erfindung bezieht sich auf ein Winkelmessgerät gemäss dem Oberbegriff des Patentanspruches 1.

Aus der US-A-3 344 531 ist eine mit einem Gewicht belastete Zeigeranordnung zur Anzeige der Lotrechten vorgesehen. Mit einer seitlich an einem Gehäuse angeordneten Schraube kann das mit einer Verzahnung versehene Gehäuse für eine Scheibe mit Skaleneinteilung verdreht werden. Ein Massstab ist mit einer klammer seitlich am Gehäuse befestigt.

Aus der US-A-4 112 581 ist eine Mikrometervorrichtung zur Messung von Distanzen und Winkeln an Gegenständen vorbekannt. Ein drehbar mit einem Winkelmesser verbundener Finger kann an einer Fläche des zu vermessenden Gegenstandes angelegt werden. Die Mikrometerlehre gemäss dieser Druckschrift eignet sich nicht zur Messung des Winkels bezüglich der Lotrechten.

Es ist eine Aufgabe der vorliegenden Erfindung, ein Winkelmessgerät derart auszubilden, dass der abgelesene Wert auf einfache Art und Weise z.B. auf ein ausserhalb des Winkelmessgerätes befindliches Zeichenblatt oder Werkstück übertragen werden kann.

Im weiteren ist es eine Aufgabe der vorliegenden Erfindung, ein Winkelmessgerät derart auszubilden, dass zur Einstellung eines zu messenden Winkelwertes die Zeigeranordnung ungehemmt rotieren kann und zur Uebertragung eines gemessenmen Winkelwertes mit einem Uebertragungsorgan die Zeigeranordnung mit dem Uebertragungsorgan blockiert und deblockiert werden kann.

Dies wird erfindungsgemäss dadurch erzielt, dass im Bereich der Skala eine Zeigeranordnung zur Anzeige der Lotrechten drehbar gelagert ist, und ein an einem im Zentrum der Skala angeordneten Handgriff drehbar befestigtes, über das Winkelmessgerät hinausragendes Organ zur Uebertragung der auf der Skala angebrachten Winkelwerte vorgesehen ist, wobei im Handgriff Arretiermittel zum wahlweisen Blockieren und Deblockieren des Uebertragungsorganes mit der Zeigeranordnung angeordnet sind.

Weitere Ausführungsformen der Erfindung ergeben sich aus den Merkmalen der abhängigen Patentansprüche.

Im folgenden werden anhand der beiliegenden Zeichnung Ausführungsbeispiele der Erfindung sowie deren Verwendung näher beschrieben. Es zeigen:

**Fig. 1** einen Schnitt durch das Winkelmessgerät,

**Fig. 2** eine Draufsicht auf die Skala und die Zeigeranordnung des Winkelmessgerätes,

**Fig. 3** einen Schnitt durch ein zweites Ausführungsbeispiel des Winkelmessgerätes,

**Fig. 4** eine Draufsicht auf das Winkelmessgerät gemäss Fig. 3,

**Fig. 5, 6 und 7** drei verschiedene Stellungen des Handgriffes des Winkelmessgerätes,

**Fig. 8,** einen Querschnitt durch die Lupe zur Ablesung der Skalenwerte,

**Fig. 9** eine perspektivische Ansicht eines dritten Ausführungsbeispieles des auf eine Schiene aufgesetzten Winkelmessgerätes mit Messstab und Messwinkel,

**Fig. 10** einen Schnitt durch die Schiene gemäss der Fig. 11,

**Fig. 11** einen Schnitt durch das Winkelmessgerät,

**Fig. 12** eine Draufsicht, teilweise geschnitten, auf den Handgriff und den Messstab,

**Fig. 13** einen Schnitt durch den Mittelteil des Winkelmessgerätes,

**Fig. 14** eine Draufsicht auf die Skala des Winkelmessgerätes,

**Fig. 15** eine schematische Darstellung des auf die Messschiene aufgesetzten Winkelmessgerätes mit in die Schiene eingesetztem Messwinkel.

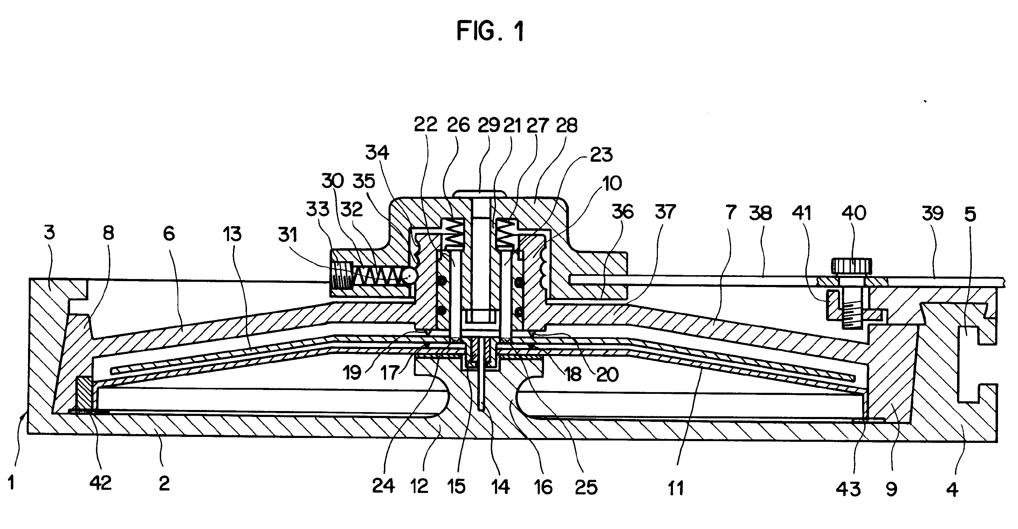

Aus Fig. 1 ist ein Schnitt durch das Winkelmessgerät ersichtlich. Es weist ein Gehäuse 1 mit einem Bodenteil 2 und Seitenteilen 3 und 4 auf. Im Seitenteil 4 ist eine Nut 5 zur Einführung einer Schiene eingelassen. In das Gehäuse ist ein zumindest im mittleren Bereich 6 transparenter Abdeckteil 7 eingelassen. Dieser Teil 7 ist mit an den Seitenteilen 3 und 4 des Gehäuses anliegenden Randteilen 8 und 9 versehen. Im mittleren Bereich ist der Abdeckteil 7 mit einem Ansatz 10 versehen. Innerhalb des Bodenteils 2 des Gehäuses 1 sowie des Abdeckteils 7 ist eine Skala 11 auf einem Mittelteil 12 des Bodenteils 2 angeordnet. Zwischen der Skala 11 und dem Abdeckteil 7 ist eine bewegliche Zeigeranordnung 13 angeordnet. Auf einer im Mittelteil 12 vorgesehenen Achse 14 ist ein Rubin-Bolzen 15 aufgesetzt, um welchen mit einem mittleren Teil 16 die Zeigeranordnung 13 drehbar gelagert ist. Auf ihrer der Skala 11 gegenüberliegenden Unterseite ist die Zeigeranordnung 13 mit Lagerteilen 17 und 18 versehen. An den unteren Enden ist der Ansatz 10 des Abdeckteils 7 ebenfalls mit Lagerteilen 19 und 20 versehen. Innerhalb des Ansatzes 10 ist ein Zapfen 21 angeordnet, in welchem zwei Stifte 22 und 23 eingelassen sind. In der Zeigeranordnung sind zwei Durchgangslöcher 24 und 25 vorgesehen, in welche die Stifte 22 und 23 eingreifen können. Die Stifte 22 und 23 sind mit Federn 26 und 27 im Zapfen 21 gehalten. konzentrisch zum Zapfen 21 und zum Ansatz 10 des Abdeckteiles 7 ist ein zylinderförmiger Handgriff 28 auf dem Zapfen 21 mit Hilfe eines Befestigungsstiftes 29 befestigt. Seitlich am Handgriff 28 ist eine Bohrung 30 vorgesehen, an deren dem Ansatz 10 zugekehrten Ende eine Kugel 31 eingelassen wird, welche mit einer Feder 32 belastet wird. Am äusseren Ende der Bohrung 30 ist ein mit einem Gewinde versehener Zapfen 33 zur Halterung der Feder 32 eingesetzt. Am äusseren Umfang des Ansatzes 10 sind zwei umlaufende Rillen 34 und 35 vorgesehen, in welche die Kugel 31 eingreifen kann. In der obersten Stellung, wenn also die Kugel 31 in die Rille 34 eingreift, kann die Zeigeranordnung 13 frei gedreht werden. In einer mittleren Stellung, wenn also die Kugel 31 in die Rille 35 eingreift, wird die Zeigeranordnung 13 durch die beiden Stifte 22 und 23 gebremst. In der untersten Stellung, wenn eine Unterkante 36 des Handgriffes auf einem horizontalen Bereich 37 des Abdeckteils 7 aufliegt, gelangen die Stifte 22 und 23 in Eingriff mit den Durchgangslöchern 24 und 25, und die Zeigeranordnung kann mit dem Handgriff 28 gedreht werden. Gegenüberliegend der Bohrung 30 ist am Handgriff 28 ein Organ 38 zur Uebertragung der Winkelwerte eingelassen. Dieses Organ 38 liegt auf einem am oberen Ende des Seitenteiles 4 des Gehäuses 1 befestigten Auflageteil 39 auf. Im Organ 38 ist eine Arretierschraube 40 eingelassen, welche in einen Arretierteil 41 eingeschraubt ist. Beim Anziehen der Schraube drückt der Arretierteil 41 gegen den Auflageteil 39, wodurch das Organ zur Uebertragung der Winkelwerte 38 in der eingestellten Lage arretiert wird. Zwischen den Randteilen 8 und 9 des Abdeckteiles 7 und der Skala 11 sind Dichtungen 42 und 43 eingesetzt, so dass der Raum zwischen der Skala 11 und dem Abdeckteil 7 mit einer Flüssigkeit, beispielsweise Oel, gefüllt werden kann.

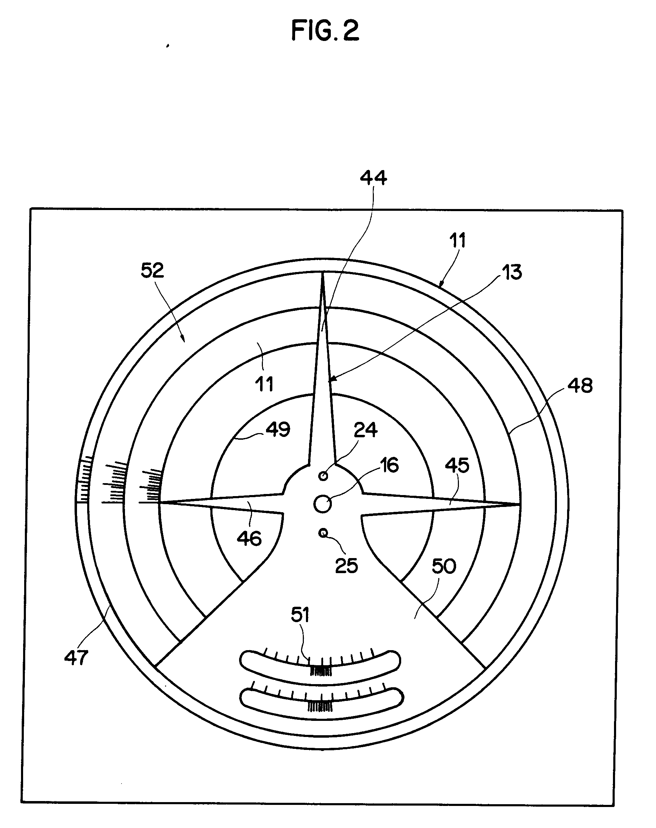

Fig. 2 zeigt eine Draufsicht auf die Skala 11 und die darüber angeordnete, drehbar gelagerte Zeigeranordnung 13. Die Zeigeranordnung 13 weist drei in einem Winkel von 90° zueinander stehende Zeigeranordnungen 44, 45 und 46 auf. Auf der Skala sind ein äusserer Bereich 47 in Prozent, ein mittlerer Bereich 48 in neue Grad und ein innerer Bereich 49 in alte Grad aufgeteilt. Mit der Zeigeranordnung 44 wird der äussere Bereich in Prozent, mit der Zeigeranordnung 45 der mittlere Bereich in neuen Grad und mit der Zeigeranordnung 46 der innere Bereich in alten Grad abgelesen. An dem den drei Zeigeranordnungen 44, 45 und 46 gegenüberliegenden, kreissegmentförmigen Teil 50 ist mindestens ein Nonius 51 eingelassen. Durch Einfluss der Gravitationskraft wird durch den beschriebenen Aufbau der Zeigeranordnung durch den kreissegmentförmigen Teil 50 bewirkt, dass sich die Zeigeranordnung 44 jeweils in einer Lotrechten befindet.

Zur Bestimmung eines bestimmten Neigungswinkels wird der Handgriff in die oberste Stellung gebracht, d.h. die Kugel 31 rastet in die oberste Rille 34 ein. Wenn die Zeigeranordnung die Ableseposition eingenommen hat, d.h. die Zeigeranordnung 44 sich in einer Lotrechten befindet, so kann der Handgriff in die unterste Stellung gebracht werden, so dass die beiden Stifte 22 und 23 in die entsprechenden Durchgangslöcher 24 und 25 einrasten. Nun kann mit dem Organ 38 zur Uebertragung der Winkelwerte 47, 48, 49 der abgelesene Winkel ausserhalb des Winkelmessgerätes, z. B. auf ein Zeichnungsblatt, übertragen werden.

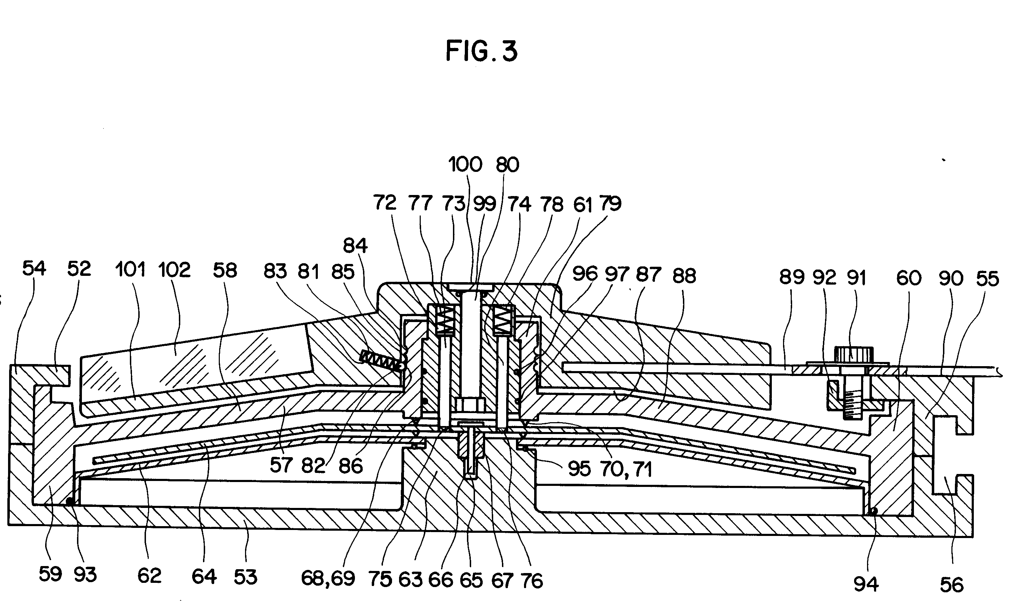

Aus Fig. 3 ist ein Schnitt durch eine zweite Ausführungsform des Winkelmessgerätes ersichtlich. Es weist ein Gehäuse 52 mit einem Bodenteil 53 und Seitenteilen 54 und 55 auf. Im Seitenteil 55 ist eine Nut 56 zur Einführung einer Schiene eingelassen. In das Gehäuse ist ein zumindest im mittleren Bereich 57 transparenter Abdeckteil 58 eingelassen. Dieser Teil 58 ist mit an den Seitenteilen 54 und 55 des Gehäuses anliegenden Randteilen 59 und 60 versehen. Im mittleren Bereich ist der Abdeckteil 58 mit einem Ansatz 61 versehen. Innerhalb des Bodenteils 53 des Gehäuses 52 sowie des Abdeckteils 58 ist eine Skala 62 auf einem Mittelteil 63 des Bodenteils 53 angeordnet. Zwischen der Skala 62 und dem Abdeckteil 58 ist eine Zeigeranordnung 64 angebracht. Auf einer im Mittelteil 63 vorgesehenen Achse 65 ist ein Rubin-Bolzen 66 aufgesetzt, um welchen mit einem mittleren Teil 67 die Zeigeranordnung 64 drehbar gelagert ist. An den unteren Enden ist der Ansatz 61 des Abdeckteils 58 mit vier Lagerteilen 68, 69, 70 und 71 versehen. Innerhalb des Ansatzes 61 ist ein Zapfen 72 angeordnet, in welchem zwei Stifte 73 und 74 eingelassen sind. In der Zeigeranordnung sind zwei Durchgangslöcher 75 und 76 vorgesehen, in welche die Stifte 73 und 74 eingreifen können. Die Stifte 73 und 74 sind mit Federn 77 und 78 im Zapfen 72 gehalten. Konzentrisch zum Zapfen 72 und zum Ansatz 61 des Abdeckteiles 58 ist ein zylinderförmiger Handgriff 79 auf dem Zapfen 72 mit Hilfe einer Achse 80 befestigt. Seitlich am Handgriff 79 ist eine Bohrung 81 vorgesehen, an deren dem Ansatz 61 zugekehrten Ende eine Kugel 82 eingelassen wird, welche mit einer Feder 83 belastet wird. Am äussern Umfang des Ansatzes 61 sind drei umlaufende Rillen 84, 85 und 86 vorgesehen, in welche die Kugel 82 eingreifen kann. In der obersten Stellung, wenn also die Kugel 82 in die Rille 84 eingreift, kann die Zeigeranordnung 64 frei gedreht werden. In einer mittleren Stellung, wenn also die Kugel 82 in die Rille 85 eingreift, wird die Zeigeranordnung 64 durch die beiden Stifte 73 und 74 gebremst. In der untersten Stellung, wenn eine Unterkante 87 des Handgriffes auf einem horizontalen Bereich 88 des Abdeckteils 58 aufliegt, gelangen die Stifte 73 und 74 in Eingriff mit den Durchgangslöchern 75 und 76, und die Zeigeranordnung kann mit dem Handgriff 79 gedreht werden. Gegenüberliegend der Bohrung 81 ist am Handgriff 79 ein Organ 89 zur Uebertragung der Winkelwerte 103, 104, 105 eingelassen. Dieses Organ 89 liegt auf dem oberen Rand 90 des Seitenteiles 55 des Gehäuses 52 auf. Im Organ 89 ist eine Arretierschraube 91 eingelassen, welche in einen Arretierteil 92 eingeschraubt ist. Beim Anziehen der Schraube drückt der Arretierteil 92 gegen den Rand 90, wodurch das Organ 89 zur Uebertragung der Winkelwerte in der eingestellten Lage arretiert wird. Zwischen den Randteilen 59 und 60 des Abdeckteiles 58 und der Skala 62 sind Dichtungen 93 und 94 eingesetzt, so dass der Raum zwischen der Skala 62 und dem Abdeckteil 58 mit einer Flüssigkeit, beispielsweise Oel, gefüllt werden kann. Die beiden Stifte 73 und 74 sowie die Durchgangslöcher 75 und 76 sind bezüglich der Achse 80 exzentrisch angeordnet. Im Mittelteil 63 ist ein Dichtungsring 95 vorgesehen, der diesen Mittelteil gegen die Skala 62 abdichtet. Im Zapfen 72 sind zwei Dichtungsringe 96 und 97 angeordnet, die den in der Höhe mittels des Handgriffes 79 verstellbaren Zapfen 72 gegenüber dem Ansatz 61 des Abdeckteils 58 abdichtet. Im mittleren Bereich des Handgriffes 79, gegenüberliegend dem oberen Rand des Zapfens 72, ist ebenfalls ein Dichtungsring 98 angeordnet. Im weiteren ist im oberen Bereich der Achse 80 noch ein Dichtungsring 99 vorgesehen. Auf diesem Dichtungsring und dem oberen Ende der Achse 80 liegt ein im mittleren oberen Bereich des Handgriffes 79 eingelassener Abschlussteil 100 auf.

In einem Winkel von 180°, gegenüberliegend dem Organ 89 zur Uebertragung der Winkelwerte, ist in einer Verlängerung 101 des Handgriffes 79 eine Lupe 102 eingelassen.

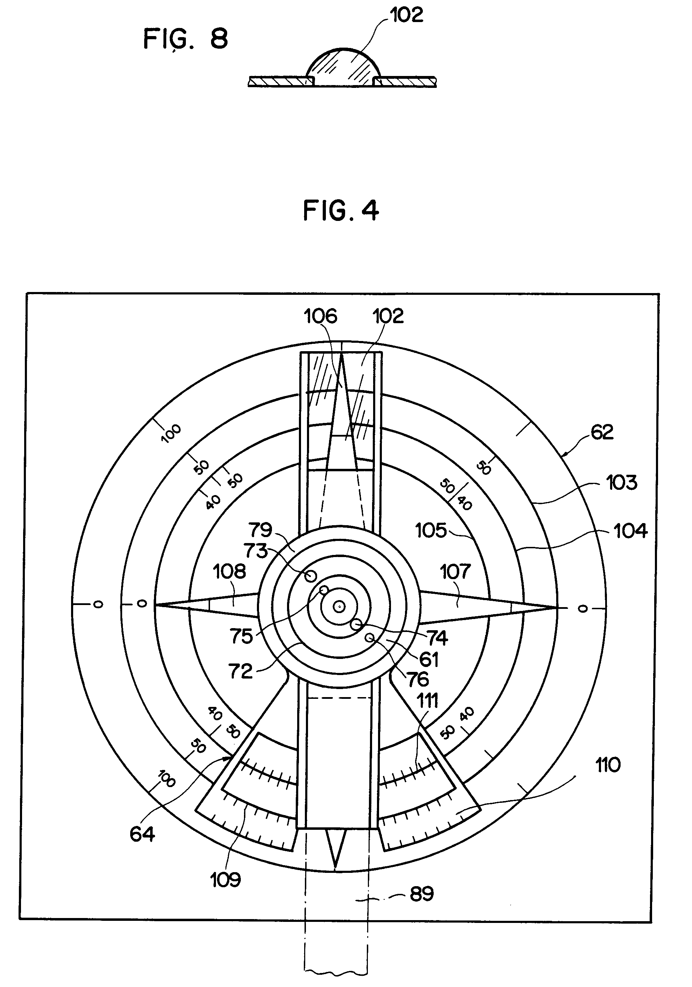

In Fig. 4 ist eine Draufsicht auf die zweite Ausführungsform des Winkelmessgerätes dargestellt. Die Skala 62 ist in drei Bereiche aufgeteilt, wobei der äusserste Bereich 103 in Prozent, der mittlere Bereich 104 in neue Grad und der innere Bereich 105 in alte Grad aufgeteilt ist. Aus dieser Fig. ist auch die exzentrische Anordnung der beiden Stifte 73 und 74 sowie der Löcher 75 und 76 ersichtlich. Diese Anordnung hat den Vorteil, dass die Stifte in einem Winkelbereich von 63° lediglich einmal in die richtige Position einrasten können. Die Zeigeranordnung 64 ist mit drei einzelnen Zeigern 106, 107 und 108 versehen, wobei der längste Zeiger 106 den Winkel in Prozenten, der mittlere Zeiger 107 den Winkel in neuen Grad und der kürzeste Zeiger 108 den Winkel in alten Grad angibt. Gegenüberliegend dem langen Zeiger 106 ist ein Kreissegment 109 angeordnet, welches bewirkt, dass sich der lange Zeiger 106 in der Ableselage, d.h. wenn sich der Handgriff in der obersten Position befindet, immer in der Lotrechten steht. Das Kreissegment 109 ist im Bereich der neuen Grad und der alten Grad mit je einem Nonius 110 und 111 versehen.

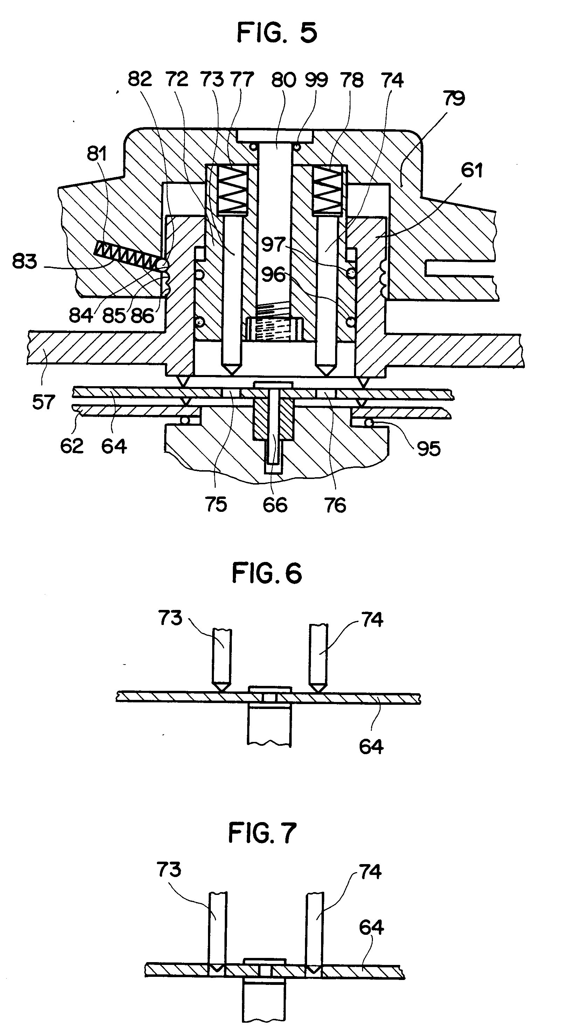

In den Fig. 5, 6 und 7 ist der Handgriff in der obersten, in der mittleren und in der untersten Stellung dargestellt. In der obersten Stellung rastet die Kugel 82 in die oberste Rille 84, in der mittleren Stellung in die mittlere Rille 85 und in der untersten Stellung in die Rille 86 ein. In der obersten Stellung kann sich die Zeigeranordnung 64 frei drehen, in der mittleren Stellung wird sie nach dem Einpendeln auf den richtigen Wert abgebremst, und in der untersten Stellung wird sie blockiert, indem die beiden Stifte 73 und 74 in die Durchgangslöcher 75 und 76 eingreifen. Nun kann mit dem Organ 89 zur Uebertragung der Winkelwerte der abgelesene Winkel ausserhalb des Winkelmessgerätes, z. B. auf ein Zeichnungsblatt oder ein Werkstück übertragen werden, wobei auch zum Beispiel ein Holzstück direkt in einer entlang dem Organ 89 geführten Säge entzweigetrennt werden kann.

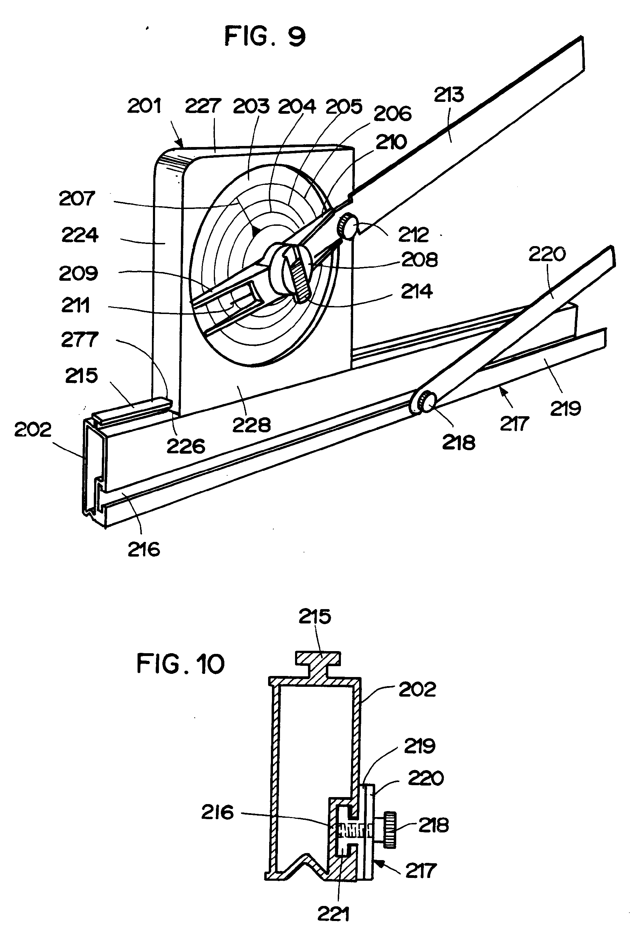

In Fig. 8 ist ein Querschnitt durch die Lupe 102 dargestellt.

Das Winkelmessgerät ersetzt sowohl eine Wasserwaage als auch ein Schrägmass und ein Streichmass; es umfasst diese Instrumente in einem Gerät. In die Nut 5 resp. 56 des Gehäuses 1 bzw. 52 kann eine Schiene eingeführt werden, welche z.B. an der Wand befestigt werden kann, so dass das Gerät vertikal verstellbar ist. An der Schiene kann ebenfalls eine Nut ähnlich wie in der Gehäusewand des Winkelmessgerätes vorgesehen sein, in welche eine zweite Schiene teleskopartig eingeführt wird. Auf dem Organ zur Uebertragung der Winkelwerte ist vorzugsweise eine Einteilung in cm und inches angebracht.

Anstelle der Stifte 22, 23 resp. 73 und 74 und der entsprechenden Durchgangslöchern könnten beispielsweise auch Saugnäpfe oder Magnete vorgesehen sein.

In der Zeigeranordnung, vorzugsweise im kreissegmentförmigen Teil 50 resp. 109, könnte zusätzlich noch eine Libelle zur Anzeige der Waagrechten angebracht werden.

Das Winkelmessgerät dient sowohl als Mess- und Arbeitsgerät als auch als Gerät zur Messung des Innen- und Aussenwinkels sowie als Schrägmass, Streichmass und Wasserwaage.

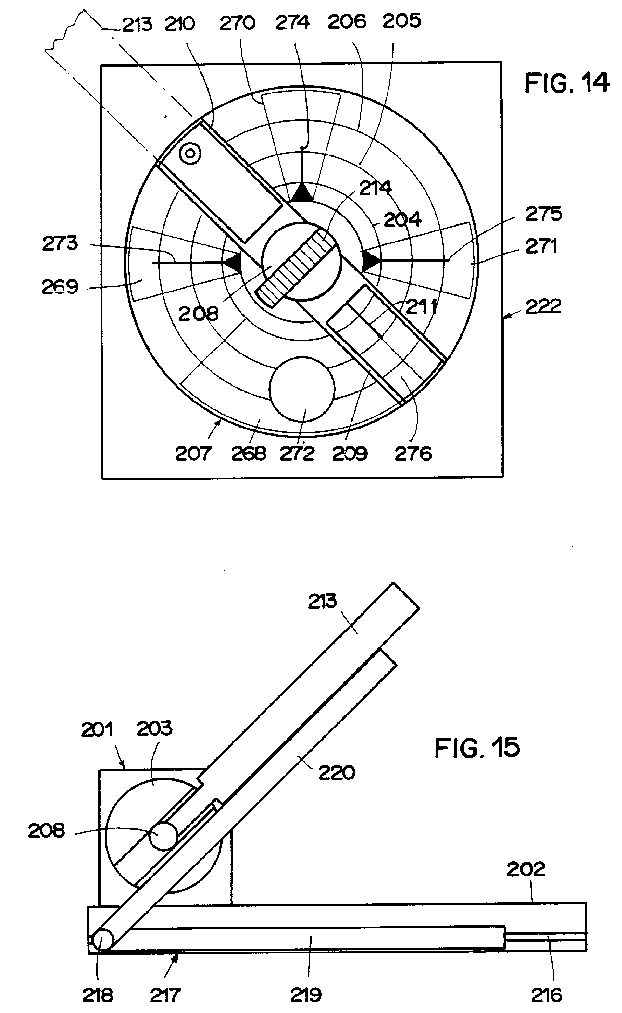

In Fig. 9 ist perspektivisch die Anordnung des dritten Ausführungsbeispieles des Winkelmessgerätes 201 auf einer Messschiene 202 dargestellt. Das Winkelmessgerät 201 weist eine Skala 203 mit drei Bereichen 204, 205 und 206 in alten Grad, neuen Grad und Prozenten auf. Oberhalb der Skala 203 ist eine Zeigeranordnung 207 vorgesehen. An einer Mittelachse ist ein Handgriff 208 mit zwei Ansätzen 209 und 210 angebracht. Der Ansatz 209 ist in der Mitte mit einer Strichmarke 211 versehen, wobei in die Ausnehmung des Ansatzes eine Lupe zur besseren Ablesung der Skalenwerte eingesetzt werden kann. Im Ansatz 210 ist mit einer Rändelmutter 212 ein Messstab 213 befestigt. Mit dem Messstab 213 können die auf der Skala abgelesenen Werte nach aussen beispielsweise auf ein zuzuschneidendes Holzstück übertragen werden. Der Handgriff 208 ist mit einem Schieber 214 versehen, mit welchem über einen Mechanismus die Zeigeranordnung 207 blockiert werden kann, wenn sich die Strichmarke 211 über einem Zeiger befindet. Das Winkelmessgerät 201 ist an der unteren Seite mit einer Nut 277 versehen, mittels welcher es an einer oben an der Messschiene 202 angebrachten Befestigungsschiene 215 befestigt werden kann. Seitlich an der Messschiene 202 ist eine Längsnut 216 vorgesehen, in welcher ein Messwinkel 217 verschiebbar befestigt ist. Der Messwinkel 217 weist zwei über ein Scharnier verbundene Schenkel 219 und 220 auf, welche mit einer Rändelmutter 218 in der eingestellten Lage fixiert werden können. Auf diesen Messwinkel kann, wie weiter unten in der Beschreibung der Fig. 15 noch erläutert wird, der mit dem Messstab eingestellte Winkel übertragen werden.

In Fig. 10 ist ein Querschnitt durch die Messschiene 202 gemäss Fig. 9 dargestellt. Der Messwinkel 217 kann bei Nichtgebrauch im Innern des Hohlprofils der Messschiene 202 untergebracht werden. Der Schenkel 219 des Messwinkels 217 ist mit einer Führungsschiene 221 versehen, welche in die Nut 216 eingeschoben wird.

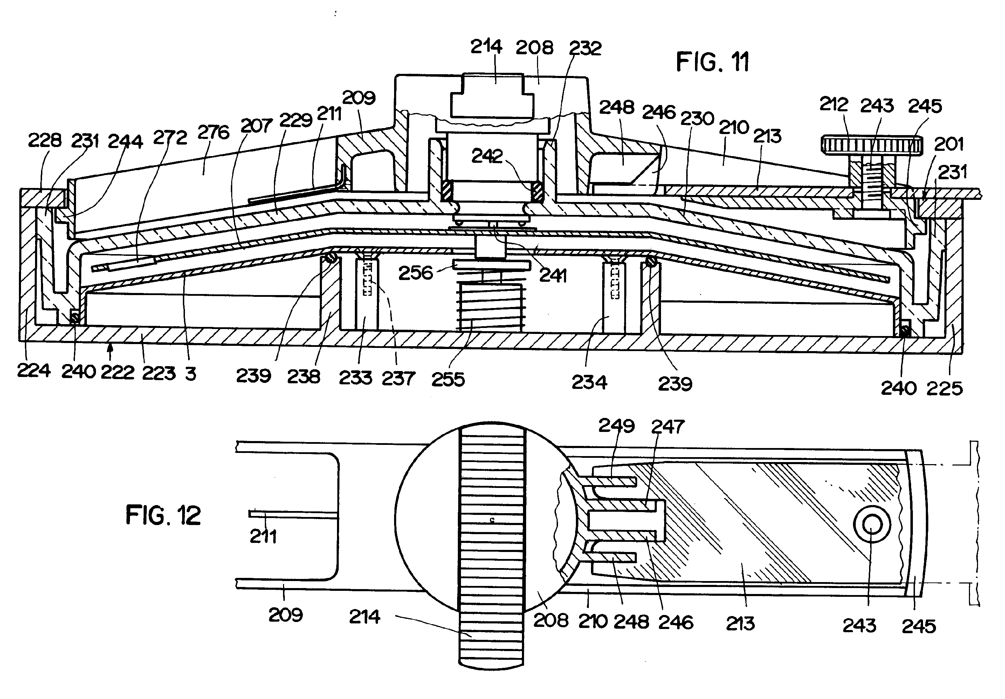

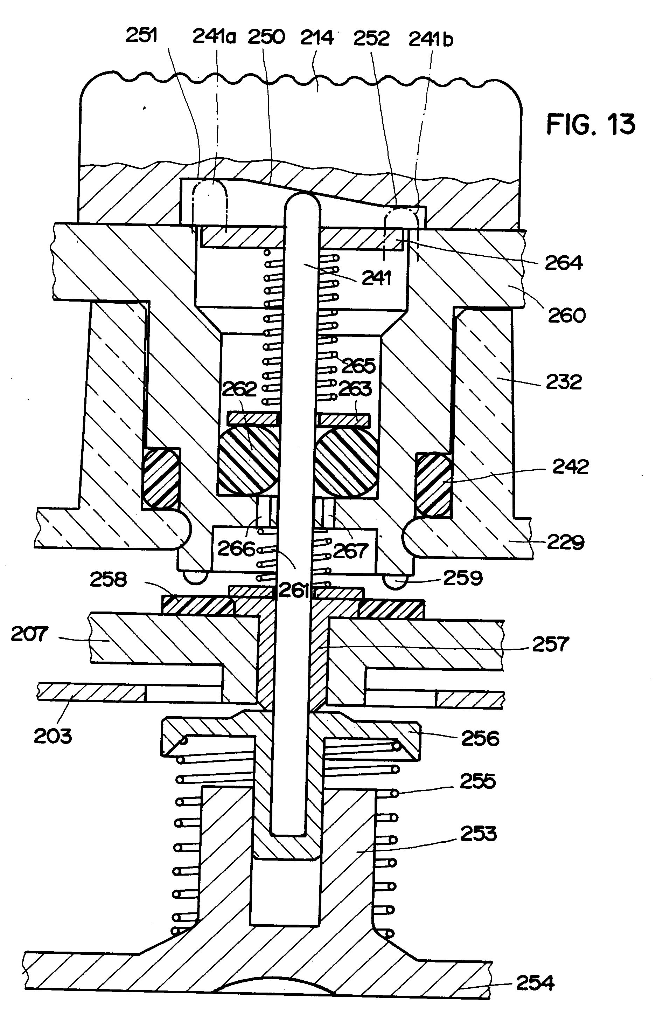

In Fig. 11 ist ein Schnitt durch das Winkelmessgerät 201 dargestellt. Das Winkelmessgerät 201 weist ein Gehäuse 222 mit einem Bodenteil 223, Seitenteilen 224, 225, 226, 227 sowie einem Deckelteil 228 auf. Die Seitenteile 226 und 227 sind aus Fig. 13 nicht ersichtlich. In das Gehäuse 222 ist ein zumindest im mittleren Bereich 229 transparenter Abdeckteil 230 eingelassen. Dieser Teil 230 ist mit einem zylinderförmigen, an den Seitenteilen 224 bis 227 in deren Mittelteil anliegenden Randteil 231 versehen. In seinem mittleren Bereich ist der Abdeckteil 230 mit einem Ansatz 232 versehen. Zwischen dem Bodenteil 223 und dem Abdeckteil 230 ist die Skala 203 auf mit dem Bodenteil 223 verbundenen Pfeilern 233, 234, 235 und 236 befestigt, wobei die Pfeiler 234 und 235 aus Fig. 13 nicht ersichtlich sind. Die Skala 203 ist auf den Pfeilern mit Schrauben 237 angeschraubt. Ausserhalb dieser Pfeiler 233 bis 236 ist konzentrisch zur Mittelachse des Winkelmessgerätes ein hohlzylinderförmiger Aufbau 238 angebracht, welcher zuoberst einen O-Ring 239 trägt. An dem dem Randteil 231 benachbarten Ende der Skala 203 ist diese mit einem O-Ring 240 gegen den Randteil des transparenten Abdeckteils 230 abgedichtet. Die Abdichtung muss deshalb erfolgen, da sich zwischen der Skala 203 und dem Abdeckteil 230 eine Flüssigkeit, beispielsweise Oel, befindet. Die Zeigeranordnung 207 ist mit einer Achse 241 zur Rotation der Zeigeranordnung verbunden. beliegend an den Ansatz 232 des Abdeckteils 230 ist ein weiterer O-Ring 242 vorgesehen. Die Mutter 212 zur Befestigung des Messstabes 213 im Ansatz 210 ist auf einer im Ansatz 210 eingelassenen Schraube 243 aufgeschraubt. Die Ansätze 209 und 210 des Handgriffes 208 weisen an ihrem äusseren Ende je eine Rippe 244 und 245 auf, welcher unter den Deckelteil 228 des Gehäuses 222 greift.

In Fig. 12 ist eine Draufsicht auf den Handgriff 208 mit den Ansätzen 209 und 210 teilweise im Schnitt dargestellt. Zur Führung und Halterung des Messstabes 23 sind zwei Führungsstäbe 246 und 247 sowie zwei Auflagestäbe 248 und 249 am Handgriff 208 angebracht.

In Fig. 13 ist ein Schnitt durch den mittleren Bereich des Winkelmessgerätes dargestellt. Der Schieber 214 weist in seinem unteren Bereich eine schräge Fläche 250 mit zwei Absätzen 251 und 252 auf. Beim Verschieben des Schiebers 214 wird die Achse 241 durch die schräge Fläche 250 in der vertikalen Lage verstellt, wobei die obere bzw. die untere Lage horizontal verschoben und mit 241a bzw. 241b bezeichnet ist. Ueber den vertikalen Teil 253 einer Sockelplatte 254 ist eine Feder 255 aufgesetzt, welche einen mit der Achse 241 verbundenen Teil 256 vertikal nach oben drückt, so dass der obere Teil der Achse 241 immer an der schrägen Fläche 250 anliegt. In die Zeigeranordnung 207 ist ein Teil 257 eingepresst, welcher durch den Teil 256 nach oben verschoben wird, wenn die Achse 241 in der Lage 241a befindlich ist. Oberhalb der Zeigeranordnung 207 ist eine Gummischeibe 258 vorgesehen, welche in der Lage 241a der Achse in Eingriff mit einem ringförmigen Absatz 259 eines Drehteils 260 gelangt. Der Teil 260 wird mit dem Handgriff 208 zusammen verdreht. Zwischen einem unteren Bereich des Drehteils 260 und einer auf dem Teil 257 aufliegenden Messingscheibe ist eine Feder 261 angeordnet, welche den Teil 257 auf den Teil 256 drückt. Innerhalb des Drehteils 260 ist ein O-Ring 262 vorgesehen, auf welchem eine Messingscheibe 263 aufliegt. Oben an der Achse 241 ist eine Messingscheibe 264 mit der Achse verbunden. Zwischen den beiden Messingscheiben 263 und 264 ist eine Feder 265 vorgesehen, welche die Messingscheibe 263 auf den O-Ring 262 drückt. Durch zwei Bohrungen 266 und 267 kann bei Ausdehnung der im Winkelmessgerät befindlichen Flüssigkeit ein Teil in den Raum zwischen Achse 241 und O-Ring 262 gelangen, wobei gegebenenfalls die Federpackung, bestehend aus O-Ring 262, Platte 263, Feder 265, nach oben gedrückt wird. Wenn die Gummischeibe in Eingriff mit dem ringförmigen Ansatz 259 gelangt, so wird der Messstab 213 mit der Zeigeranordnung 207 blockiert. Der abgelesene und eingestellte Winkelwert auf der Skala kann dann durch den Messstab auf einen Gegenstand ausserhalb des Winkelmessgerätes übertragen werden. Anstelle der Gummischeibe 258 und des ringförmigen Ansatzes 259 könnte die Blockierung auch beispielsweise mit Stiften oder Magneten erfolgen.

Aus Fig. 14 ist eine Draufsicht auf das Winkelmessgerät ersichtlich. Die Zeigeranordnung 207 besteht vorzugsweise aus transparentem Kunststoff und umfasst vier Sektoren 268, 269, 270 und 271, wobei im Sektor 268 ein Gewicht 272 angebracht ist, welches die lotrechte Lage der Zeigeranordnung 207 gewährleistet. In den Sektoren 269, 270 und 271 ist je ein Zeiger 273, 274 und 275 mit Farbe markiert. Wenn die Zeigeranordnung 207 frei beweglich ist, der Schieber 214 also in einer solchen Position befindlich ist, dass sich die Achse 241 in der Lage 241b befindet, so kann der Messstab 213 verdreht werden, bis dass die Strichmarke 211 über wahlweise einen der Zeiger 273, 274 oder 275 zu liegen kommt. Danach wird der Schieber 214 verstellt, so dass die Zeigeranordnung 207 nicht mehr frei beweglich ist, d.h. die Achse 241 in die Lage 241a zu liegen kommt und die Gummischeibe 258 in Eingriff mit dem zylinderförmigen Ansatz 259 gelangt (siehe Fig. 15). Im Verlängerungsteil 209 ist eine Linse 276 zur besseren Ablesemöglichkeit der Skalenwerte 204, 205 und 206 angebracht.

In Fig. 15 ist noch eine Verwendungsmöglichkeit des Messwinkels 217 dargestellt. Der Messwinkel 217 wird in der Nut 216 der Messschiene 202 soweit verschoben, bis der Schenkel 220 am Messstab 213 anliegt. Mit der Mutter werden dann die beiden Schenkel 219 und 220 des Messwinkels fixiert. Der Messwinkel 217 kann anschliessend aus der Nut 216 herausgezogen werden, wobei dann der eingestellte Winkel auf ein Werkstück übertragen werden kann.

## Patentansprüche

1. Winkelmessgerät mit einem Gehäuse (1; 52; 222) und einer innerhalb des Gehäuses (1; 52; 222) angeordneten Skala (11; 62; 203), dadurch gekennzeichnet, dass im Bereich der Skala (11; 62; 203) eine Zeigeranordnung (13; 64; 207) zur Anzeige der Lotrechten drehbar gelagert ist, und ein an einem im Zentrum der Skala angeordneten Handgriff (28; 79; 208) drehbar befestigtes, über das Gehäuse (1; 52; 222) hinausragendes Organ (38; 89; 213) zur Uebertragung der auf der Skala angebrachten Winkelwerte (47, 48, 49; 103, 104, 105; 204, 205, 206) vorgesehen ist, wobei im Handgriff (208) Arretiermittel (214, 241, 258, 259) zum wahlweisen Blockieren und Deblockieren des Uebertragungsorganes (38; 89; 213) mit der Zeigeranordnung (13; 64; 207) angeordnet sind.

2. Winkelmessgerät nach Patentanspruch 1, dadurch gekennzeichnet, dass die Skala je einen Bereich (47, 48, 49; 103, 104, 105; 204, 205, 206) in Prozenten, neuen Grad und alten Grad aufweist.

3. Winkelmessgerät nach Patentanspruch 1, dadurch gekennzeichnet, dass die Zeigeranordnung (13; 64; 207) drei Zeiger (44, 45, 46; 106, 107, 108; 273, 274, 275) umfasst.

4. Winkelmessgerät nach einem der vorangehenden Patentansprüche, dadurch gekennzeichnet, dass in dem dem Organ zur Uebertragung der Winkelwerte (89) gegenüberliegenden Teil des Handgriffes (79) eine Lupe (102) zur Vergrösserung der abgelesenen Skalenwerte (103, 104, 105) angeordnet ist.

5. Winkelmessgerät nach einem der vorangehenden Patentansprüche, dadurch gekennzeichnet, dass in der Zeigeranordnung (13; 64) mindestens ein Nonius (51; 110, 111) vorgesehen ist.

6. Winkelmessgerät nach einem der vorangehenden Patentansprüche, dadurch gekennzeichnet, dass in der Zeigeranordnung (13; 64) mindestens eine Libelle zur Anzeigung der Waagrechten angebracht ist.

7. Winkelmessgerät nach einem der vorangehenden Patentansprüche, dadurch gekennzeichnet, dass die Arretiermittel einen Betätigungsteil (214) mit einer zum Gehäuse (222) des Winkelmessgerätes geneigten Fläche (250) und eine durch die Fläche (250) beim Verschieben des Betätigungsteils (214) in der Höhe verstellbare Achse (241) umfassen, wobei bei der Höhenverstellung der Achse die Zeigeranordnung (207) in Eingriff und ausser Eingriff mit dem Handgriff (208) gelangt.

8. Winkelmessgerät nach einem der vorangehenden Patentansprüche, dadurch ekennzeichnet, dass im Bereich der Achse (241) auf der Zeigeranordnung (207) eine Gummischeibe (258) angeordnet ist, und der Handgriff (208) mit einem Drehteil (259, 260) zum Eingreifen in die Gummischeibe versehen ist.

9. Winkelmessgerät nach einem der vorangehenden Patentansprüche, gekennzeichnet durch erste Verbindungsmittel (277) zum lösbaren Verbinden des Winkelmessgerätes (201) mit einer Schiene (202).

## Claims

1. A goniometer with a housing (1; 52; 222) and a scale (11; 62; 203) disposed within the housing (1; 52; 222), characterized in that a pointer arrangement (13; 64; 207) for indicating the vertical values is pivotably mounted in the region of the scale (11; 62; 203), and in that there is a component (38; 89; 213) for transferring the angular values (47, 48, 49; 103, 104, 105; 204, 205, 206;) on the scale, projecting beyond the housing (1; 52; 222) and pivotingly secured to a handle (28; 79; 208) disposed in the centre of the scale, locking means (214, 241, 258, 259) being disposed in said handle (208) for selectively locking and releasing the transfer component (38; 89; 213) with the pointer arrangement (13; 64; 207).

2. The goniometer of claim 1, characterized in that the scale includes a sector graduated in percent, a sector graduated in grads, and a sector graduated in degrees (47, 48, 49; 103, 104, 105; 204, 205, 206).

3. The goniometer of claim 1, characterized in that the pointer arrangement (13; 64; 207) comprises three pointers (44, 45, 46; 106, 107, 108; 273, 274 275;).

4. The goniometer of one of the preceding claims, characterized in that a magnifying lens (102) for magnifying the values (103, 104, 105) read off the scale is disposed in the portion of the handle (79) opposite the component for transferring the angular values (89).

5. The goniometer of one of the preceding claims, characterized in that the pointer arrangement (13; 64), includes at least one vernier scale (51; 110, 111).

6. The goniometer of one of the preceding claims, characterized in that at least one level for indicating the horizontal values is disposed in the pointer arrangement (13; 64).

7. The goniometer of one of the preceding claims, characterized in that the locking means comprise an actuating part (214) with a surface (250) inclined to the housing (222) of the goniometer and an axis (241) which can be vertically adjusted by the surface (250) on displacing the actuating part (214), the pointer arrangement (207) engaging and disengaging with the handle (208) when the axis is vertically adjusted.

8. The goniometer of one of the previous claims, characterized in that a rubber washer (258) is disposed on the pointer arrangement (207) in the area of the axis (241), and in that the handle (208) is provided with a rotary part (259, 260) for engaging in the rubber washer.

9. The goniometer of one of the previous claims, characterized by first connection means (277) for detachably connecting the goniometer (201) with a bar (202).


**Revendications**

1. Instrument de mesure d'angles comprenant un cadre (1; 52; 222) et une échelle graduée (11; 62; 203) disposée à l'intérieur du cadre (1; 52; 222), caractérisé en ce qu'un dispositif d'aiguille (13; 64; 207) est disposé de façon pivotante à proximité de l'échelle graduée (11; 62; 203) pour indiquer la verticale, et un organe (38; 89; 213) étant prévu, faisant saillie par dessus le cadre (1; 52; 222), fixé de façon pivotante à une poignée (28; 79; 208) disposée au centre de l'échelle graduée, pour le report de valeurs angulaires convenables (47, 48, 49; 103, 104, 105, 204, 205, 206) sur l'échelle graduée, des moyens d'arrêt (214, 241, 258, 259) étant disposés dans la poignée (208) pour sélectivement bloquer et débloquer l'organe de report (38; 89; 213) avec le dispositif d'aiguille (13; 64; 207).

2. Instrument de mesure d'angles selon la revendication 1, caractérisé en ce que l'échelle graduée comprend une zone (47, 48, 49; 103, 104, 105, 204, 205, 206) graduée en pour-cents, en degrés et en grades.

3. Instrument de mesure d'angles selon la revendication 1, caractérisé en ce que le dispositif d'aiguille (13; 64; 207) comprend trois aiguilles (44, 45, 46; 106, 107, 108, 273, 274, 275).

4. Instrument de mesure d'angles selon l'une des revendications précédentes, caractérisé en ce qu'il comprend une loupe (102) disposée dans la partie de la poignée (79) vis-à-vis de l'organe pour le report de valeurs angulaires (89), pour l'agrandissement des valeurs lues sur l'échelle graduée (103, 104, 105).

5. Instrument de mesure d'angles selon l'une des revendications précédentes caractérisé en ce qu'au moins un vernier (51; 110, 111) est disposé sur le dispositif d'aiguille (13; 64).

6. Instrument de mesure d'angles selon l'une des revendications précédentes, caractérisé en ce qu'au moins un niveau à bulle est disposé dans le dispositif d'aiguille (13; 64) pour indiquer l'horizontale.

7. Instrument de mesure d'angles selon l'une des revendications précédentes, caractérisé en ce que les moyens d'arrêt comprennent une pièce d'actionnement (214) ayant une surface (250) inclinée vers le cadre (222) de l'instrument de mesure d'angles et un axe (241) mobile en hauteur à travers la surface (250) pour déplacer la pièce d'actionnement (214), le dispositif d'aiguille (207) pouvant être connecté ou déconnecté de la poignée (208) par le mouvement en hauteur de l'axe.

8. Instrument de mesure d'angles selon l'une des revendications précédentes, caractérisé en ce qu'un disque de caoutchouc (258) est disposé sur le dispositif d'aiguille (207) à proximité de l'axe (241), et en ce que la poignée (208) comprenant une partie pivotante (259,260) est prévue pour accrocher le disque de caoutchouc.

9. Instrument de mesure d'angles selon l'une des revendications précédentes, caractérisé par des premiers moyens de connexion (277) connecter de manière amovible l'instrument de mesure d'angles avec un rail (202).

**FIG. 1**

# FIG. 2

# FIG. 3

EP 0 336 891 B1

EP 0 336 891 B1

FIG. 8

102

FIG. 4

11

# FIG. 5

# FIG. 6

# FIG. 7

12

## FIG. 9

## FIG. 10

FIG. 11

FIG. 12

FIG. 13

213 210 270 274 206 205

FIG. 14

273
269

275
271

222

207 268 272 209 276

213

201 203

FIG. 15

220

208

202

218 217 219 216

16